# EUROPEAN PATENT SPECIFICATION

(11) **EP 3 715 834 B1**
(45) Date of publication and mention of the grant of the patent: **03.04.2024**
(21) Application number: 17936231.4
(22) Date of filing: 29.12.2017
(51) Int. Cl.: G06V 10/82, G06V 10/764

(54) **GRAIN IDENTIFICATION METHOD AND DEVICE, AND COMPUTER STORAGE MEDIUM**
KORNIDENTIFIKATIONSVERFAHREN UND -VORRICHTUNG UND COMPUTERSPEICHERMEDIUM
PROCÉDÉ ET DISPOSITIF D'IDENTIFICATION DE GRAINS, ET SUPPORT D'ENREGISTREMENT INFORMATIQUE

(43) Date of publication of application: 30.09.2020
(73) Proprietor: Midea Group Co., Ltd., Foshan, Guangdong 528311 (CN)
(72) Inventor: ZHU, Linnan, Foshan, Guangdong 528311 (CN); ZHOU, Junyang, Foshan, Guangdong 528311 (CN); LONG, Yongwen, Foshan, Guangdong 528311 (CN); ZHOU, Zongxu, Foshan, Guangdong 528311 (CN); CHEN, Bidong, Foshan, Guangdong 528311 (CN); XIAO, Qunhu, Foshan, Guangdong 528311 (CN)
(74) Representative: Whitlock, Holly Elizabeth Ann
(86) International application number: PCT/CN2017/119932
(87) International publication number: WO 2019/127400

(56) References cited:
- CN-A- 101 701 916
- CN-A- 101 788 497
- CN-A- 102 279 976
- CN-A- 103 268 492
- JP-A- 2002 312 762
- Megha R Siddagangappa ET AL: "Classification and Quality Analysis of Food Grains", IOSR Journal of Computer Engineering Ver. III, 1 January 2014 (2014-01-01), pages 2278-8727, XP55277688, Retrieved from the Internet: URL:http://www.iosrjournals.org/iosr-jce/p apers/Vol16-issue4/Version-3/A016430110.pd f [retrieved on 2016-06-03]
- ALI TENVIR ET AL: "Detecting fraudulent labeling of rice samples using computer vision and fuzzy knowledge", MULTIMEDIA TOOLS AND APPLICATIONS, KLUWER ACADEMIC PUBLISHERS, BOSTON, US, vol. 76, no. 23, 22 February 2017 (2017-02-22), pages 24675-24704, XP036380463, ISSN: 1380-7501, DOI: 10.1007/S11042-017-4472-9 [retrieved on 2017-02-22]
- VITHU P ET AL: "Machine vision system for food grain quality evaluation: A review", TRENDS IN FOOD SCIENCE AND TECHNOLOGY, ELSEVIER SCIENCE PUBLISHERS, GB, vol. 56, 25 July 2016 (2016-07-25), pages 13-20, XP029737961, ISSN: 0924-2244, DOI: 10.1016/J.TIFS.2016.07.011
- NEELAMMA K PATIL ET AL: "Color and Texture Based Identification and Classification of food Grains using different Color Models and Haralick features", INTERNATIONAL JOURNAL ON COMPUTER SCIENCE AND ENGINEERING, vol. 3, no. 12, 1 December 2011 (2011-12-01), pages 3669-3680, XP55716180, ISSN: 0975-3397
- POUND MICHAEL P ET AL: "Deep Learning for Multi-task Plant Phenotyping", 2017 IEEE INTERNATIONAL CONFERENCE ON COMPUTER VISION WORKSHOPS (ICCVW), IEEE, 22 October 2017 (2017-10-22), pages 2055-2063, XP033303667, DOI: 10.1109/ICCVW.2017.241 [retrieved on 2018-01-19]

## Description

### TECHNICAL FIELD

The disclosure relates to an image recognition technology, and particularly to a method and device for recognizing grain and a computer storage medium.

### BACKGROUND

Emergence of intelligent home appliances brings great convenience to people's daily lives. For example, a user is only required to select a cooking mode of an electric rice cooker, and the electric rice cooker can automatic cooking according to cooking time corresponding to the selected cooking mode. However, a mode interaction manner of an electric rice cooker for rice-type selection includes a rice type selection-free mode and a manual rice type selection mode. If a user does not know about a rice type, only the rice type selection-free mode may be selected. If an electric rice cooker capable of automatically recognizing a rice type is provided and a cooking mode is further determined based on the rice type, a convenient interaction manner may be provided for a user, thereby improving user experience. However, there is yet no effective solution at present in the conventional art.

Document D1 Megha R Siddagangappa ET AL: "Classification and Quality Analysis of Food Grains", IOSR Journal of Computer Engineering Ver. Ill, 1 January 2014 (2014-01-01), pages 2278-8727, XP55277688 discloses that if the grain type is classified as rice, a quality analysis is carried out. Document D2 ALI TENVIR ET AL: "Detecting fraudulent labeling of rice samples using computer vision and fuzzy knowledge", MULTIMEDIA TOOLS AND APPLICATIONS, KLUWER ACADEMIC PUBLISHERS, BOSTON, US, vol. 76, no. 23, 22 February 2017 (2017-02-22), pages 24675-24704, XP036380463 discloses detecting fraudulent labeling of rice samples using computer vision and fuzzy knowledge. Document D3 VITHU P ET AL: "Machine vision system for food grain quality evaluation: A review", TRENDS IN FOOD SCIENCE AND TECHNOLOGY, ELSEVIER SCIENCE PUBLISHERS, GB, vol. 56, 25 July 2016 (2016-07-25), pages 13-20, XP029737961, document D4 NEELAMMA K PATIL ET AL: "Color and Texture Based Identification and Classification of food Grains using different Color Models and Haralick features", INTERNATIONAL JOURNAL ON COMPUTER SCIENCE AND ENGINEERING, vol. 3, no. 12, 1 December 2011 (2011 -12-01), pages 3669-3680, XP55716180, and document D5 POUND MICHAEL P ET AL: "Deep Learning for Multitask Plant Phenotyping", 2017 IEEE INTERNATIONAL CONFERENCE ON COMPUTER VISION WORKSHOPS (ICCVW), IEEE, 22 October 2017 (2017-10-22), pages 2055-2063, XP033303667 are the documents of the prior art in the technical field in question.

### SUMMARY

In order for solving the existing technical problem, the embodiments of the disclosure provide a method and a device for recognizing grain and a computer storage medium.

In order for realizing the above objective, the technical solutions of the embodiments of the disclosure are implemented as follows.

Aspects of the present invention are set out in the accompanying claims. The embodiments of the disclosure provide a method for recognizing grain, which may include the following operations.

First image data having grain to be recognized is obtained.

A first recognition result is obtained based on the first image data and a first recognition model, and a second recognition result is obtained based on the first image data and a second recognition model. The first recognition result characterizes a type of the grain to be recognized, and the second recognition result characterizes a variety of the grain to be recognized.

Information of the grain to be recognized is determined based on the first recognition result and the second recognition result.

In an embodiment, the method may further include the following operations.

Multiple pieces of second image information are obtained. The second image information includes second image data and corresponding label data.

Feature enhancement processing is performed on the second image data to obtain feature-enhanced image data.

Data enhancement processing is performed on the feature-enhanced image data to obtain data-enhanced image data.

Learning and training is performed based on the data-enhanced image data and the corresponding label data, and a recognition model is obtained.

In an embodiment, in response to that the label data characterizes a type of a grain, the operation that the recognition model is obtained may include an operation that the first recognition model is obtained.

In response to that the label data characterizes a variety of the grain, the operation that the recognition model is obtained may include an operation that the second recognition model is obtained.

In an embodiment, before the operation that feature enhancement processing is performed on the second image data, the method may further include the following operations.

Brightness of the second image data is recognized, and the second image data is clipped based on the brightness to obtain second image sub data. A brightness difference of the second image sub data satisfies a preset condition.

Correspondingly, the operation that feature enhancement processing is performed on the second image data may include an operation that feature enhancement processing is performed on the second image sub data.

In an embodiment, the operation that feature enhancement processing is performed on the second image data to obtain the feature-enhanced image data may include the following operations.

The second image data is converted into a grayscale image, and contrast enhancement processing is performed on the grayscale image to obtain contrast-enhanced image data. The feature-enhanced image data is obtained based on the contrast-enhanced image data.

In an embodiment, the operation that data enhancement processing is performed on the feature-enhanced image data to obtain the data-enhanced image data may include the following operations.

The feature-enhanced image data is flipped and/or rotated to obtain flipped image data and/or rotated image data corresponding to the feature-enhanced image data, and the data-enhanced image data is generated based on the flipped image data and/or the rotated image data.

In an embodiment, the operation that the first recognition result is obtained based on the first image data and the first recognition model, the second recognition result is obtained based on the first image data and the second recognition model and the information of the grain to be recognized is determined based on the first recognition result and the second recognition result may include the following operations.

The first recognition result is obtained based on the first image data and the first recognition model. A confidence level that the grain to be recognized belongs to the type in the first recognition result is obtained. In response to that the confidence level that the grain to be recognized belongs to the type reaches a first preset condition, the second recognition result is obtained based on the first image data and the second recognition model. A confidence level that the grain to be recognized belongs to the variety in the second recognition result is obtained. In response to that the confidence level that the grain to be recognized belongs to the variety reaches a second preset condition, the variety of the grain to be recognized is determined as the information of the grain to be recognized. In response to that the confidence level that the grain to be recognized belongs to the variety does not reach the second preset condition, the type of the grain to be recognized is determined as the information of the grain to be recognized.

The embodiments of the disclosure provide a device for recognizing grain, which may include a memory and a processor.

The memory may store a computer program capable of being executed by the processor.

The processor may be configured to run the computer program to execute the operations of: obtaining first image data having a grain to be recognized; obtaining a first recognition result based on the first image data and a first recognition model and obtaining a second recognition result based on the first image data and a second recognition model, the first recognition result characterizing a type of the grain to be recognized and the second recognition result characterizing a variety of the grain to be recognized; and determining information of the grain to be recognized based on the first recognition result and the second recognition result.

In an embodiment, the processor may further be configured to run the computer program to execute the operations of: obtaining multiple pieces of second image information, the second image information including second image data and corresponding label data; performing feature enhancement processing on the second image data to obtain feature-enhanced image data; performing data enhancement processing on the feature-enhanced image data to obtain data-enhanced image data; and performing learning and training based on the data-enhanced image data and the corresponding label data to obtain a recognition model.

In an embodiment, the processor may further be configured to run the computer program to execute the operations of: in response to that the label data characterizes a type of grain, obtaining the first recognition model; and in response to that the label data characterizes a variety of the grain, obtaining the second recognition model.

In an embodiment, the processor may further be configured to run the computer program to execute the operations of: recognizing brightness of the second image data and clipping the second image data based on the brightness to obtain second image sub data, a brightness difference of the second image sub data satisfying a preset condition; and performing feature enhancement processing on the second image sub data to obtain the feature-enhanced image data.

In an embodiment, the processor may be configured to run the computer program to execute the operations of: converting the second image data into a grayscale image, and performing contrast enhancement processing on the grayscale image to obtain contrast-enhanced image data; and obtaining the feature-enhanced image data based on the contrast-enhanced image data.

In an embodiment, the processor may be configured to run the computer program to execute the operations of: flipping and/or rotating the feature-enhanced image data to obtain flipped image data and/or rotated image data corresponding to the feature-enhanced image data, and generating the data-enhanced image data based on the flipped image data and/or the rotated image data.

In an embodiment, the processor may be configured to run the computer program to execute the operations of: obtaining the first recognition result based on the first image data and the first recognition model; obtaining a confidence level that the grain to be recognized belongs to the type in the first recognition result; in response to that the confidence level that the grain to be recognized belongs to the type reaches a first preset condition, obtaining the second recognition result based on the first image data and the second recognition model; obtaining a confidence level that the grain to be recognized belongs to the variety in the second recognition result; in response to that that the grain to be recognized belongs to the variety reaches a second preset condition, determining the variety of the grain to be recognized as the information of the grain to be recognized; and in response to that the confidence level that the grain to be recognized belongs to the variety does not reach the second preset condition, determining the type of the grain to be recognized as the information of the grain to be recognized.

The embodiments of the disclosure also provide a computer storage medium having stored thereon a computer instruction. The instruction, when executed by a processor, implements the steps of the method for recognizing grain of the embodiments of the disclosure.

According to the method and the device for recognizing grain and computer storage medium provided in the embodiments of the disclosure, the method includes operations as follows. The first image data of the grain to be recognized is obtained. The first recognition result is obtained based on the first image data and the first recognition mode. The second recognition result is obtained based on the first image data and the second recognition model. The first recognition result characterizes the type of the grain to be recognized and the second recognition result characterizes the variety of the grain to be recognized. The information of the grain to be recognized is determined based on the first recognition result and the second recognition result. With the technical solutions of the embodiments of the disclosure, grain can be automatically recognized in an image recognition manner, and a technical support is provided for automatically setting a cooking mode of a cooking device based on the type and the variety of grain, without recognizing the type and the variety of the grain by a user with eyes, which provides convenience to a user not knowing about the type and variety of grain in a cooking process, thereby greatly improving user experience.

### BRIEF DESCRIPTION OF THE DRAWINGS

FIG. 1 is a flowchart of a method for recognizing grain according to an embodiment of the disclosure.
FIG. 2a and FIG. 2b are schematic diagrams respectively illustrating grain types in the method for recognizing grain according to an embodiment of the disclosure.
FIG. 3 is a flowchart of training a recognition model in a method for recognizing grain according to an embodiment of the disclosure.
FIG. 4 is another flowchart of training a recognition model in a method for recognizing grain according to an embodiment of the disclosure.
FIG. 5a and FIG. 5b are first application diagrams of training a recognition model in a method for recognizing grain according to an embodiment of the disclosure respectively.
FIG. 6 is a second application diagram of training a recognition model in a method for recognizing grain according to an embodiment of the disclosure.
FIG. 7a to FIG. 7h are third application diagrams of training a recognition model in a method for recognizing grain according to an embodiment of the disclosure respectively.
FIG. 8 is an application flowchart of a method for recognizing grain according to an embodiment of the disclosure.
FIG. 9 is a composition structure diagram of a device for recognizing grain according to an embodiment of the disclosure.

### DETAILED DESCRIPTION

The disclosure is further described below in combination with the drawings and embodiments in detail.

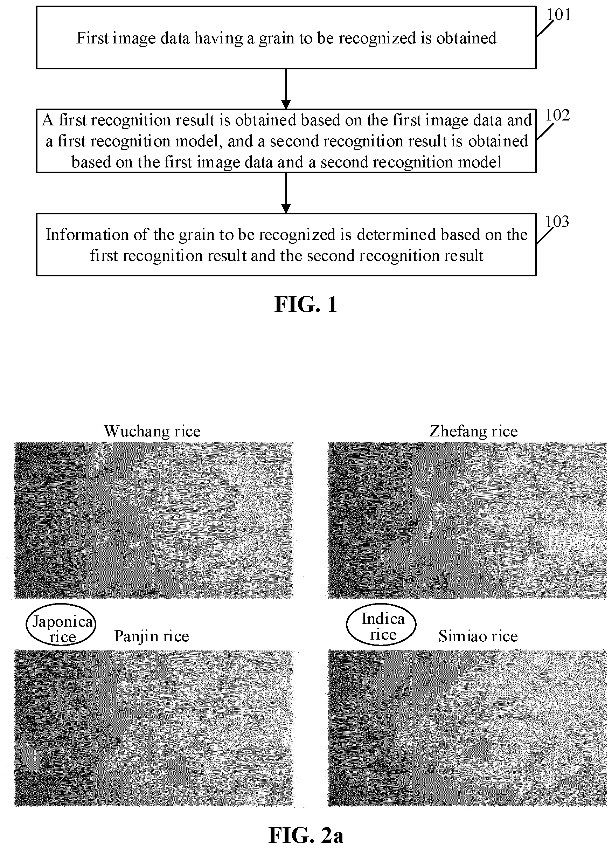

An embodiment of the disclosure provides a method for recognizing grain. FIG. 1 is a flowchart of a method for recognizing grain according to an embodiment of the disclosure. As shown in FIG. 1, the method includes the following operations.

In 101, first image data having a grain to be recognized is obtained.

In 102, a first recognition result is obtained based on the first image data and a first recognition model, and a second recognition result is obtained based on the first image data and a second recognition model. The first recognition result characterizes a type of the grain to be recognized and the second recognition result characterizes a variety of the grain to be recognized.

In 103, information of the grain to be recognized is determined based on the first recognition result and the second recognition result.

The method for recognizing grain of the embodiment of the disclosure may be applied to a device. As a first implementation mode, the device may be a kitchen device, the kitchen device is provided with an image acquisition component (for example, a camera). Image data is acquired through the image acquisition component, and the acquired image data is analyzed and recognized to determine the variety of the grain to be recognized. As a second implementation mode, the device may be a kitchen device having no image acquisition function, the kitchen device may communicate with another device having an image acquisition component, image data is acquired through the image acquisition component of the another device, and the kitchen device obtains the image data acquired by the another device through a communication link with the another device. As a third implementation mode, the device may be an electronic device, the electronic device may be a mobile device such as a mobile phone and a tablet computer. The electronic device acquires image data, analyzes and recognizes the acquired image data to determine the variety of the grain to be recognized, and determines a cooking parameter based on the variety of the grain to be recognized and sends the cooking parameter to a kitchen device. The first image data includes the grain to be recognized, and the grain to be recognized is, for example, rice. During a practical application, the kitchen device may be a kitchen heating device such as an electric rice cooker and an electric pressure cooker.

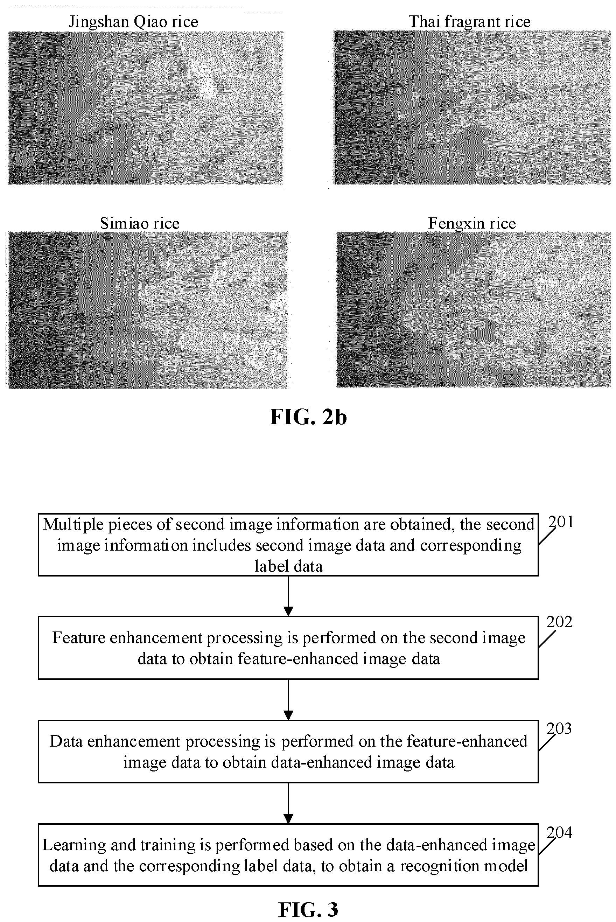

As an implementation mode, the device has a cooking (for example, rice cooking) function, that is, the device is configured to heat grains in the device. During the practical application, taking the rice as an example of the grain, the rice is rich in variety. FIG. 2a and FIG. 2b are schematic diagrams illustrating respectively grain types in a method for recognizing grain according to an embodiment of the disclosure. As shown in FIG. 2a, rice may be classified into japonica rice and indica rice. For example, Wuchang rice and Panjin rice are of japonica rice, and Zhefang rice and Simiao rice are of indica rice. Rice of different types has highly similar shape. As shown in FIG. 2b, rice of the four varieties is indica rice, and the indica rice of different varieties is highly similar. On the second aspect, due to different processing processes, rice of the same variety but different brands may have incompletely identical shapes. On the third aspect, rice screenings/broken rice easily cause misjudgments. For example, indica rice is long, and a large amount of broken indica rice is close to japonica rice in shape. Based on this, it is difficult for a user to recognize a variety of a grain based on a shape of the grain. In the embodiment of the disclosure, the device acquires an image of the grain to recognize the variety of the grain. In each of the following embodiments of the disclosure, descriptions are made under the condition that the grain is rice as an example.

In the embodiment of the disclosure, the device obtains a recognition model in advance with a learning and training method. In an embodiment, FIG. 3 is a flowchart of training a recognition model in a method for recognizing grain according to an embodiment of the disclosure. As shown in FIG. 3, the method for recognizing grain further includes the following operations.

In 201, multiple pieces of second image information are obtained. The second image information includes second image data and corresponding label data.

In 202, feature enhancement processing is performed on the second image data to obtain feature-enhanced image data.

In 203, data enhancement processing is performed on the feature-enhanced image data to obtain data-enhanced image data.

In 204, learning and training is performed based on the data-enhanced image data and the corresponding label data to obtain a recognition model.

In the embodiment, the multiple pieces of second image information for training a recognition model are obtained. The second image information includes the second image data and corresponding label data, and the label data characterizes a type of a grain in the corresponding second image data. Here, the recognition model in the embodiment includes the first recognition model and the second recognition model. The first recognition module is configured to output a grain type recognition result, and the label data in the second image information for training the first recognition model is grain type information. The second recognition model is configured to output a grain variety recognition result, and the label data in the second image information for training the second recognition model is grain variety information. The grain variety may be a subtype of the grain type. As an example, the grain type may be japonica rice or indica rice, and the grain variety may be Thai fragrant rice and the like under the type of japonica rice.

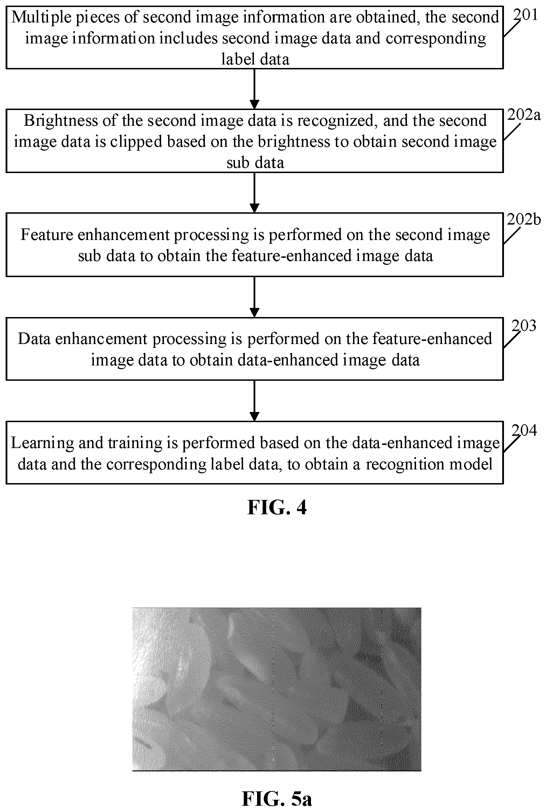

During the practical application, considering influence of a light source on the image data during acquisition of the image data by the image acquisition component, as shown in FIG. 4, before the operation that feature enhancement processing is performed on the second image data, the method may further include the following operations.

In 202a, brightness of the second image data is recognized, and the second image data is clipped based on the brightness to obtain second image sub data. A brightness difference of the second image sub data satisfies a preset condition.

The operation that feature enhancement processing is performed on the second image data includes the following operation.

In 202b, feature enhancement processing is performed on the second image sub data to obtain the feature-enhanced image data.

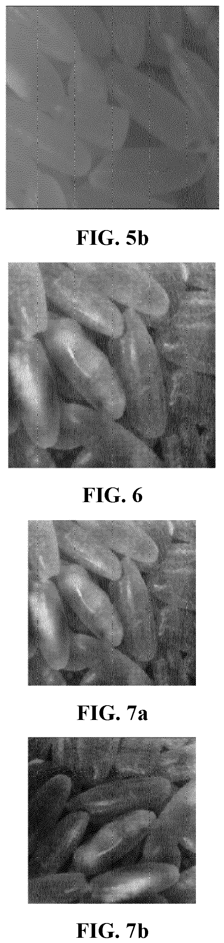

Reference may be made to FIG. 5a and FIG. 5b in this embodiment. As illustrated in FIG. 5a, illumination at a left side in the second image data is strong. Therefore, the whole second image data is not suitable as training data. As compared with a method of stretching and clipping whole image data to a positive direction in another object recognition task, which may cause image deformation, in the embodiment of the disclosure, the brightness of the second image data is recognized, and the second image data is clipped based on brightness differences between pixels to obtain the second image sub data, of which the brightness difference satisfies the preset condition, in the second image data. As shown in FIG. 5b, since illumination at the left side in the second image data is strong, a left-side region with high brightness may be removed by clipping, to obtain a right-side square region with a small brightness difference. During the practical application, a unified region size may be adopted for the image data for training the recognition model, and in such case, the second image data may be clipped based on the set region size to minimize the brightness difference of the second image sub data obtained by clipping. In the embodiment, the brightness difference of the second image sub data satisfying the preset condition may refer to the brightness difference of the second image sub data being minimum under the condition that the set region size is met.

In the embodiment of the disclosure, since a color space of the image data of the rice is special, the obtained second image data almost includes no color information. Even though the second image data is converted into a grayscale image, a morphological feature of the rice is not obvious and a classification effect is poor. Based on this, in the embodiment of the disclosure, performing feature enhancement on the second image data includes performing enhancement processing on contrast of the second image data.

Based on this, in the embodiment of the disclosure, as an implementation mode, the operation that feature enhancement processing is performed on the second image data to obtain the feature-enhanced image data includes an operation as follows. The second image data is converted into a grayscale image, contrast enhancement processing is performed on the grayscale image to obtain contrast-enhanced image data, and the feature-enhanced image data is obtained based on the contrast-enhanced image data.

Here, the obtained second image data is usually color data. In such case, the color data of red, green and blue (RGB) channels of the second image data is converted into the grayscale image, the grayscale image is further processed using a contrast enhancement algorithm. The obtained contrast-enhanced image data is determined as the feature-enhanced image data corresponding to the second image data. Contrast represents a measurement of different brightness levels between the brightest pixel and the darkest pixel in the image data, the larger the difference is, the larger the contract is, and the smaller the difference is, the smaller the contrast is. The contrast enhancement algorithm includes but is not limited to at least one of the following algorithms: a linear transformation algorithm, an exponential transformation algorithm, a logarithmic transformation algorithm, a histogram algorithm and the like. Therefore, the contrast of the image data is enhanced, especially when contrast of useful data of the image data is quite close. FIG. 6 is a second application diagram illustrating training a recognition model in a method for recognizing grain according to an embodiment of the disclosure. As shown in FIG. 6, the contrast of the image data is enhanced, so that difference between different rice grains is obvious, and transmittance degrees of different rice grains can be reflected.

Considering that the problem of over-fitting easily occurs in a case of high similarity of rice grains, a training set is expanded in a flipping and/or rotation manner in the embodiment of the disclosure. In the embodiment, the operation that data enhancement processing is performed on the feature-enhanced image data corresponding to the second image data to obtain the data-enhanced image data includes operations as follows. The feature-enhanced image data corresponding to the second image data is flipped and/or rotated to obtain flipped image data and/or rotated image data corresponding to the feature-enhanced image data. The data-enhanced image data is generated based on the flipped image data and/or the rotated image data. The feature-enhanced image data is rotated by a rotating angle, which may be a first preset angle. The first preset angle is one of the following angles: 90 degrees, 180 degrees and 270 degrees. When the feature-enhanced image data is flipped, the flipped feature-enhanced image data is further rotated, and a rotating angle may be a second preset angle. The second preset angle is one of the following angles: 90 degrees, 180 degrees and 270 degrees. It is appreciated that, as a first implementation mode, in the embodiment of the disclosure, the feature-enhanced image data may be rotated by the first preset angle and the feature-enhanced image data and the rotated feature-enhanced image data are determined as images in the training set for model training. As a second implementation mode, in the embodiment of the disclosure, after the feature-enhanced image data is flipped, the flipped feature-enhanced image data is rotated by the second preset angle, and the feature-enhanced image data, the flipped feature-enhanced image data and the flipped and rotated feature-enhanced image data are determined as images in the training set for model training. As a third implementation mode, the first implementation mode and the second implementation mode may be combined, to determine the feature-enhanced image data, the rotated feature-enhanced image data, the flipped feature-enhanced image data and the flipped and rotated feature-enhanced image data are determined as images in the training set for model training.

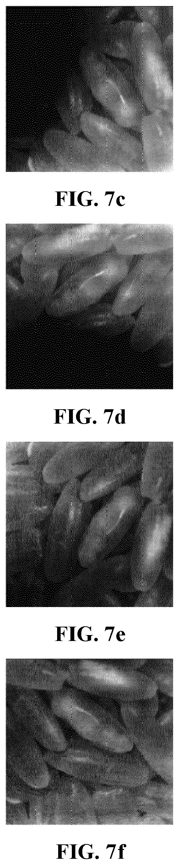

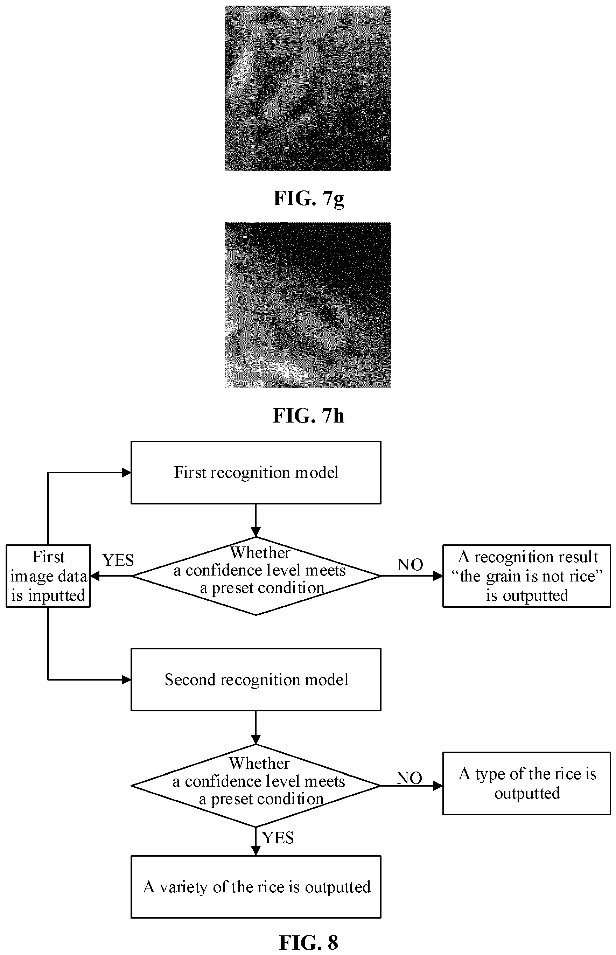

FIG. 7a to FIG. 7h are third application diagrams of training a recognition model in a method for recognizing grain according to an embodiment of the disclosure respectively. FIG. 7a illustrates the feature-enhanced image data, FIG. 7b to FIG. 7d illustrates the rotated feature-enhanced image data obtained by rotating FIG. 7a by 90 degrees, 180 degrees and 270 degrees respectively, FIG. 7e illustrates the feature-enhanced image data obtained by flipping FIG. 7a horizontally, and FIG. 7f to FIG. 7b illustrates the flipped and rotated feature-enhanced image data obtained by rotating FIG. 7e by 90 degrees, 180 degrees and 270 degrees respectively. In such a manner, a piece of image data may be expanded to eight pieces of image data, so that a high-quality training set is greatly provided without increasing an acquired data amount. In addition, possible influence of different environments in a real usage environment, for example, influence of light, is considered. For managing the influence of light and improving generalization of the model, different levels of light processing are performed on the image data of the training set.

In the embodiment of the disclosure, learning and training is performed based on the data-enhanced image data and the corresponding label data to obtain the recognition model. As an implementation mode, in response to that the label data characterizes a type of a grain, learning and training is performed based on the data-enhanced image data and the corresponding label data to obtain the first recognition model. As another implementation mode, in response to that the label data characterizes a variety of the grain, learning and training is performed based on the data-enhanced image data and the corresponding label data to obtain the second recognition model.

In the embodiment, a convolutional neural network structure is adopted to perform learning and training on the data-enhanced image data and the corresponding label data. Specifically, the data-enhanced image data is taken as an input of a convolutional neural network model, the label data is taken as an output of the convolutional neural network model, and learning and training is performed through a stochastic gradient descent method to obtain the recognition model. In response to that the label data characterizes the type of the grain, the label data characterizing the type of the grain is taken as the output of the convolutional neural network model, and learning and training is performed through the stochastic gradient descent method to obtain the first recognition model. In response to that the label data characterizes the variety of the grain, the label data characterizing the variety of the grain is taken as the output of the convolutional neural network model, and learning and training is performed through the stochastic gradient descent method to obtain the second recognition model.

The convolutional neural network structure may adopt one of the following network structures: AlexNet, VGGNet, GoogleNet and ResNet. Adopting the convolutional neural network structure for grain recognition may accurately recognize varieties of grains with high similarities and grain fineness, thereby improving recognition accuracy.

In the embodiment of the disclosure, before the first recognition result is obtained based on the first image data and the first recognition model, and the second recognition result is obtained based on the first image data and the second recognition model, the first image data is preprocessed. As an implementation mode, the first image data is preprocessed in the following manner. Feature enhancement processing is performed on the first image data to obtain the feature-enhanced image data corresponding to the first image data. As another implementation mode, the first image data is preprocessed in the following manner. Brightness of the first image data is recognized, and the first image data is clipped based on the brightness to obtain first image sub data. A brightness difference of the first image sub data satisfies the preset condition. Feature enhancement processing is performed on the first image sub data to obtain the feature-enhanced image data corresponding to the first image data. Correspondingly, the operation that the first recognition result is obtained based on the first image data and the first recognition model includes an operation as follows. The first recognition result is obtained based on the feature-enhanced image data corresponding to the first image data and the first recognition model. Regarding the clipping and feature enhancement processing on the first image data, reference may be made to the clipping and feature enhancement processing for the second image data, which will not be elaborated herein.

It is appreciated that the feature-enhanced image data corresponding to the first image data is input into the first recognition model to obtain the first recognition result, and the first recognition result may include the type of the rice in the first image data. Correspondingly, the feature-enhanced image data corresponding to the first image data is input into the second recognition model to obtain the second recognition result, and the second recognition result may include the variety of the rice in the first image data.

During the practical application, the output recognition result may include a label and a corresponding probability. When the first recognition result is output, the first recognition result includes a type label and a corresponding probability. When the second recognition result is output, the second recognition result includes a variety label and a corresponding probability. In a case that the grain is rice, it is appreciated that the outputted first recognition result may be japonica rice and a corresponding probability 89%, and indica rice and a corresponding probability 11%. It may be determined based on the first recognition result that the type of the rice is j aponica rice.

As an implementation mode, in a case that the grain is of a single type (for example, rice), the device may include the first recognition model configured to recognize the type of the rice and the second recognition model configured to recognize the variety of the rice. In the embodiment of the disclosure, the operation that the first recognition result is obtained based on the first image data and the first recognition model, the second recognition result is obtained based on the first image data and the second recognition model and the information of the grain to be recognized is determined based on the first recognition result and the second recognition result includes operations as follows. The first recognition result is obtained based on the first image data and the first recognition model. A confidence level that the grain to be recognized belongs to the type in the first recognition result is obtained. In response to that the confidence level that the grain to be recognized belongs to the type reaches a first preset condition, the second recognition result is obtained based on the first image data and the second recognition model. A confidence level that the grain to be recognized belongs to the variety in the second recognition result is obtained. In response to that the confidence level that the grain to be recognized belongs to the variety reaches a second preset condition, the variety of the grain to be recognized is determined as the information of the grain to be recognized. In response to that the confidence level that the grain to be recognized belongs to the variety does not reach the second preset condition, the type of the grain to be recognized is determined as the information of the grain to be recognized.

Referring to FIG. 8, the first image data is input into the first recognition model to recognize the type of the rice, the type of the rice is determined based on the type and corresponding probability in the obtained first recognition result, and a confidence level that the rice belongs to the type is determined. In response to that it is determined that the confidence level that the rice belongs to the type satisfies a preset condition, the first image data is input into the second recognition model to recognize the variety of the rice, the variety of the rice is determined based on the variety and the corresponding probability in the obtained second recognition result, and a confidence level that the rice belongs to the variety is determined. In response to that it is determined that the confidence level that the rice belongs to the variety satisfies a preset condition, the variety of the rice is output. In response to it is determined that the confidence level that the rice belongs to the variety does not satisfy the preset condition, the type of the rice is output.

During the practical application, the type of the rice may be determined according to a comparison result of probabilities corresponding to obtained types. However, the grain is probably not rice but morphologically close to rice, and in this case, the type of rice may be obtained while the probability corresponding to the type is not high. Based on this, if the probability that the rice belongs to the type is lower than a preset threshold value, it may be determined that the confidence level that the rice belongs to the type is low, and a recognition result indicating that the grain is not rice is output. On the contrary, if it is determined that the rice belongs to the type, that is, it is determined that the confidence level that the rice belongs to the type reaches the preset threshold value, the first image data is input into the second recognition model for recognizing the variety of the rice, to obtain the variety and the corresponding probability. Furthermore, the variety of the rice may be determined based on a probability comparison manner. If the probability that the rice belongs to the variety is low, it may be determined that the confidence level that the rice belongs to the variety is low, and the type of the rice is directly output. If the probability that the rice belongs to the variety is high, it may be determined that the confidence level that the rice belongs to the variety is high, and the variety of the rice is directly output.

As another implementation mode, if the device supports recognition for multiple types of grains (for example, rice, maize and soybean), the device may include a first recognition model for type recognition and second recognition model for variety recognition, corresponding to each type of grains. In the embodiment of the disclosure, the operation that the first recognition result is obtained based on the first image data and the first recognition model, the second recognition result is obtained based on the first image data and the second recognition model and the information of the grain to be recognized is determined based on the first recognition result and the second recognition result includes operations as follows. A first recognition result is obtained based on the first image data and the first recognition model, and a confidence level that the grain to be recognized belongs to a first type of a first grain in the first recognition result is obtained. In response to that the confidence level that the grain to be recognized belongs to the first type of the first grain reaches the first preset condition, a second recognition result is obtained based on the first image data and the second recognition model corresponding to the first grain, and a confidence level that the grain to be recognized belongs to a first variety of the first grain in the second recognition result is obtained. In response to that the confidence level that the grain to be recognized belongs to the first variety of the first grain reaches the second preset condition, the first variety of the first grain that the grain to be recognized belongs to is determined as the information of the grain to be recognized. In response to that the confidence level that the grain to be recognized belongs to the first variety of the first grain does not reach the second preset condition, the first type of the first grain that the grain to be recognized belongs to is determined as the information of the grain to be recognized.

According to the embodiment of the disclosure, the information of the grain to be recognized is determined in a manner of merging the results of the two recognition models, thereby improving robustness of the recognition result.

The implementation mode corresponds to the scenario that the device may recognize multiple types of grains. It is appreciated that the device includes two recognition models corresponding to each of multiple types of grains. The device may preliminarily recognize based on an image recognition manner that the grain to be recognized in the first image data is the first grain, and further determine the information of the first grain according to the first recognition model and second recognition model corresponding to the first grain. Regarding a determination manner for the information of the first grain, reference may be made to the abovementioned manner for determining that the grain is rice, and which will not be elaborated herein.

In an embodiment, the method further includes an operation that an operation mode is selected based on the information of the grain to be recognized, and the grain to be recognized is heated based on the operation mode. During the practical application, the device may select the operation mode based on information such as the type, variety of the grain to be recognized. The operation mode has a heating parameter matching the operation mode, and the device heats the grain to be recognized based on the heating parameter corresponding to the operation mode.

With the technical solution of the embodiment of the disclosure, a grain may be automatically recognized in an image recognition manner, a technical support is provided for automatically setting a cooking mode of a cooking device based on the type and the variety of grain without recognizing the type and the variety of the grain by a user with eyes, which provides convenience to a user not knowing about the type and variety of grain in a cooking process, thereby greatly improving user experience.

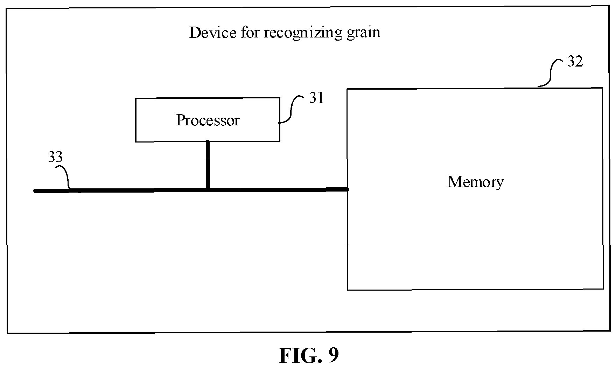

An embodiment of the disclosure also provides a device for recognizing grain. FIG. 9 is a composition structure diagram of a device for recognizing grain according to an embodiment of the disclosure. As shown in FIG. 9, the device includes: a memory 32 having stored thereon a computer program capable of being executed by a processor 31; and the processor 31, configured to run the computer program to execute the operations of: obtaining first image data having a grain to be recognized; obtaining a first recognition result based on the first image data and a first recognition model, and obtaining a second recognition result based on the first image data and a second recognition model, the first recognition result characterizing a type of the grain to be recognized and the second recognition result characterizing a variety of the grain to be recognized; and determining information of the grain to be recognized based on the first recognition result and the second recognition result.

In an embodiment, the processor 31 is further configured to run the computer program to execute the operations of: obtaining multiple pieces of second image information, the second image information including second image data and corresponding label data; performing feature enhancement processing on the second image data to obtain feature-enhanced image data; performing data enhancement processing on the feature-enhanced image data to obtain data-enhanced image data; and performing learning and training based on the data-enhanced image data and the corresponding label data to obtain a recognition model.

In an embodiment, the processor 31 is further configured to run the computer program to execute the operations of: in response to that the label data characterizes a type of a grain, obtaining the first recognition model; and in response to that the label data characterizes a variety of the grain, obtaining the second recognition model.

In an embodiment, the processor 31 is further configured to run the computer program to execute the operations of: recognizing brightness of the second image data and clipping the second image data based on the brightness to obtain second image sub data, a brightness difference of the second image sub data satisfies a preset condition; and performing feature enhancement processing on the second image sub data to obtain the feature-enhanced image data.

In an embodiment, the processor 31 is configured to run the computer program to execute the operations of: converting the second image data into a grayscale image, and performing contrast enhancement processing on the grayscale image to obtain contrast-enhanced image data; and obtaining the feature-enhanced image data based on the contrast-enhanced image data.

In an embodiment, the processor 31 is configured to run the computer program to execute the operations of: flipping and/or rotating the feature-enhanced image data to obtain flipped image data and/or rotated image data corresponding to the feature-enhanced image data, and generating the data-enhanced image data based on the flipped image data and/or the rotated image data.

In an embodiment, the processor 31 is configured to run the computer program to execute the operations of: obtaining the first recognition result based on the first image data and the first recognition model; obtaining a confidence level that the grain to be recognized belongs to the type in the first recognition result; in response to that the confidence level that the grain to be recognized belongs to the type reaches a first preset condition, obtaining the second recognition result based on the first image data and the second recognition model; obtaining a confidence level that the grain to be recognized belongs to the variety in the second recognition result; in response to that the confidence level that the grain to be recognized belongs to the variety reaches a second preset condition, determining the variety of the grain to be recognized as the information of the grain to be recognized; and in response to that the confidence level that the grain to be recognized belongs to the variety does not reach the second preset condition, determining the type of the grain to be recognized as the information of the grain to be recognized.

It is to be noted that the device for recognizing grain provided in the embodiment is described with division of the abovementioned program modules as an example during grain recognition. During the practical application, the above processing may be allocated to different program modules according to a requirement, that is, an internal structure of the device is divided into different program modules to implement all or part of abovementioned processing. In addition, the device for recognizing grain provided in the embodiment belongs to the same concept of the method for recognizing grain in the above embodiment, and for details about a specific implementation process of the device embodiment, reference may be made to the method embodiment, and will not be elaborated herein.

It is appreciated that the device further includes a bus system 33, and the components in the device are coupled together through the bus system 33. It is appreciated that the bus system 33 is configured to implement connection communication between these components. The bus system 33 includes a power bus, a control bus and a state signal bus, in addition to a data bus. However, for clear description, various buses in FIG. 9 are represented as the bus system 33.

It is appreciated that the memory 32 may be a volatile memory or a nonvolatile memory, and may also include both of the volatile and nonvolatile memories. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, a compact disc or a Compact Disc Read-Only Memory (CD-ROM). The magnetic surface memory may be a disk memory or a tape memory. The volatile memory may be a Random Access Memory (RAM), which is used as an external high-speed cache. It is exemplarily but unlimitedly described that RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM) and a Direct Rambus Random Access Memory (DRRAM). The memory 32 described in the embodiment of the disclosure is intended to include, but be not limited to, memories of these and any other proper types.

The method disclosed in the embodiment of the disclosure may be applied to the processor 31 or implemented by the processor 31. The processor 31 may be an integrated circuit chip with a signal processing capability. In an implementation process, each step of the above method may be implemented by an integrated logic circuit in the processor 31 in a hardware form or an instruction in a software form. The processor 31 may be a universal processor, a Digital Signal Processor (DSP) or another Programmable Logic Device (PLD), a discrete gate or transistor logic device, a discrete hardware component and the like. The processor 31 may implement or execute each method, step and logical block diagram disclosed in the embodiments of the disclosure. The universal processor may be a microprocessor, any conventional processor or the like. The steps of the method disclosed in combination with the embodiments of the disclosure may be directly embodied to be executed and implemented by a hardware decoding processor or executed and implemented by a combination of hardware and software modules in the decoding processor. The software module may be arranged in a storage medium, and the storage medium is located in the memory 32. The processor 31 reads information in the memory 32 and implements the steps of the above method in combination with hardware.

In an exemplary embodiment, the device for recognizing grain may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), universal processors, controllers, Micro Controller Units (MCUs), microprocessors or other electronic components, which are configured to execute the abovementioned method.

In an exemplary embodiment, the embodiment of the disclosure also provides a computer-readable storage medium, for example, a memory 32 including a computer program. The computer program may be executed by a processor 31 of a device for recognizing grain to implement the steps of the method. The computer-readable storage medium may be a memory such as an FRAM, an ROM, a PROM, an EPROM, an EEPROM, a flash memory, a magnetic surface memory, a compact disc or a CD-ROM, and may also be any device including one or any combination of these memories, for example, a mobile phone, a computer, a tablet and a personal digital assistant.

An embodiment of the disclosure provides a computer storage medium having stored thereon a computer instruction. The instruction is executed by a processor to implement the following operations. First image data having a grain to be recognized is obtained. A first recognition result is obtained based on the first image data and a first recognition model. A second recognition result is obtained based on the first image data and a second recognition model. The first recognition result characterizes a type of the grain to be recognized and the second recognition result characterizes a variety of the grain to be recognized. Information of the grain to be recognized is determined based on the first recognition result and the second recognition result.

In an embodiment, the instruction is executed by the processor to implement the following operations. Multiple pieces of second image information are obtained, the second image information includes second image data and corresponding label data. Feature enhancement processing is performed on the second image data to obtain feature-enhanced image data. Data enhancement processing is performed on the feature-enhanced image data to obtain data-enhanced image data. Learning and training is performed based on the data-enhanced image data and the corresponding label data, to obtain a recognition model.

In an embodiment, the instruction is executed by the processor to implement the following operations. In response to that the label data characterizes a type of a grain, the first recognition model is obtained. In response to that the label data characterizes a variety of the grain, the second recognition model is obtained.

In an embodiment, the instruction is executed by the processor to implement the following operations. Brightness of the second image data is recognized, and the second image data is clipped based on the brightness to obtain second image sub data. A brightness difference of the second image sub data satisfies a preset condition. Feature enhancement processing is performed on the second image sub data to obtain the feature-enhanced image data.

In an embodiment, the instruction is executed by the processor to implement the following operations. The second image data is converted into a grayscale image. Contrast enhancement processing is performed on the grayscale image to obtain contrast-enhanced image data. The feature-enhanced image data is obtained based on the contrast-enhanced image data.

In an embodiment, the instruction is executed by the processor to implement the following operations. The feature-enhanced image data is flipped and/or rotated to obtain flipped image data and/or rotated image data corresponding to the feature-enhanced image data. The data-enhanced image data is generated based on the flipped image data and/or the rotated image data.

In an embodiment, the instruction is executed by the processor to implement the following operations. The first recognition result is obtained based on the first image data and the first recognition model. A confidence level that the grain to be recognized belongs to the type in the first recognition result is obtained. In response to that the confidence level that the grain to be recognized belongs to the type reaches a first preset condition, the second recognition result is obtained based on the first image data and the second recognition model. A confidence level that the grain to be recognized belongs to the variety in the second recognition result is obtained. In response to that the confidence level that the grain to be recognized belongs to the variety reaches a second preset condition, the variety of the grain to be recognized is determined as the information of the grain to be recognized. In response to that the confidence level that the grain to be recognized belongs to the variety does not reach the second preset condition, the type of the grain to be recognized is determined the information of the grain to be recognized.

In some embodiments provided by the disclosure, it is appreciated that the disclosed device and method may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection between the device or the units,, implemented through some interfaces, and may be electrical and mechanical or in other forms.

The units described as separate parts may or may not be physically separated, and parts displayed as units may or may not be physical units. That is, the parts may be located in the same place, or may also be distributed to multiple network units. Part of all of the units may be selected according to a practical requirement to achieve the purposes of the solutions of the embodiments.

In addition, all functional units in the embodiment of the disclosure may be integrated into a processing unit, each functional unit may also serve as an independent unit, or two or more units may also be integrated into a unit. The integrated unit may be implemented in a hardware form, and may also be implemented in form of hardware and software functional unit.

Those of ordinary skill in the art should know that all or part of the steps of the method embodiment may be implemented by instructing related hardware through a program. The above program may be stored in a computer-readable storage medium. The program is executed to implement the steps of the above method embodiment. The storage medium includes: various media capable of storing program codes such as a mobile storage device, an ROM, an RAM, a magnetic disk or a compact disc.

Alternatively, when being implemented in form of software functional module and sold or used as an independent product, the above integrated unit of the disclosure may also be stored in a computer-readable storage medium. Based on such an understanding, the essential part of the technical solution of the embodiments of the disclosure or the part of the technical solution making contributions to the conventional art may be embodied in form of software product, and the computer software product is stored in a storage medium, including a plurality of instructions configured to enable a computer device (which may be a personal computer, a server, a network device or the like) to execute all or part of the method in each embodiment of the disclosure. The storage medium includes: various media capable of storing program codes such as a mobile memory device, an ROM, an RAM, a magnetic disk or a compact disc.

The foregoing is only the specific implementation mode of the disclosure, however, the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall conform to the scope of protection of the appended claims.

## Claims

1. A method for recognizing grain, comprising:
obtaining (101) first image data having grain to be recognized;
inputting (102) the first image data into a first recognition model to obtain a first recognition result, wherein the first recognition result identifies a type of the grain to be recognized; and
obtaining a confidence level that the grain to be recognized belongs to the type of grain in the first recognition result,
**characterized by**:
in response to determining that the confidence level that the grain to be recognized belongs to the type of grain meets a first preset condition, inputting the first image data into a second recognition model associated with the identified type of grain to obtain a second recognition result, wherein the second recognition result identifies a variety of the grain to be recognized;
obtaining a confidence level that the grain to be recognized belongs to a variety of the grain type in the second recognition result;
in response to determining that the confidence level meets a second preset condition, outputting the variety of the grain to be recognized as a recognition result; and
in response to determining that the confidence level does not meet the second preset condition, outputting the type of the grain to be recognized as the recognition result.

2. The method of claim 1, further comprising:
obtaining (201) a plurality of pieces of second image information, wherein the second image information comprises second image data and corresponding label data;
performing (202) feature enhancement processing on the second image data to obtain feature-enhanced image data;
performing (203) data enhancement processing on the feature-enhanced image data to obtain data-enhanced image data; and
training (204) the first recognition model and the second recognition model using the data-enhanced image data and the corresponding label data.

3. The method of claim 2, wherein in response to that the label data characterizes a type of a grain, the step (204) of training comprises: training the first recognition model using grain type information **characterized by** the label data; and
in response to that the label data characterizes a variety of the grain, the step (204) of training comprises: training the second recognition model using grain variety information **characterized by** the label data.

4. The method of claim 2, wherein before the step (202) of performing feature enhancement processing on the second image data, the method further comprises:
recognizing (202a) brightness of the second image data, and clipping the second image data to remove image data having a brightness difference larger than a preset condition so as to obtain second image sub data, wherein a brightness difference of the second image sub data satisfies a preset condition; and
correspondingly, the step (202) of performing feature enhancement processing on the second image data comprises: performing (202b) feature enhancement processing on the second image sub data.

5. The method of any one of claims 2 to 4, wherein the step (202) of performing feature enhancement processing on the second image data to obtain the feature-enhanced image data comprises:
converting the second image data into a grayscale image, and performing contrast enhancement processing on the grayscale image to obtain contrast-enhanced image data; and determining the contrast-enhanced image data as the feature-enhanced image data.

6. The method of any one of claims 2 to 4, wherein the step (203) of performing data enhancement processing on the feature-enhanced image data to obtain the data-enhanced image data comprises:
performing flipping and/or rotating on the feature-enhanced image data to obtain flipped image data and/or rotated image data corresponding to the feature-enhanced image data, and determining the flipped image data and/or the rotated image data as the data-enhanced image data.

7. A device for recognizing grain, comprising:
at least one processor; and
at least one memory coupled to the at least one processor, the at least one memory storing computer readable instructions, which when executed by the at least one processor, cause the at least one processor to perform the method of any one of claims 1 to 6.

8. A computer program product comprising instructions to cause the device of claim 7 to carry out the steps of the method of any one of claims 1 to 6.

9. A computer storage medium having stored thereon the computer program product of claim 8.

## Patentansprüche

1. Verfahren zum Erkennen von Körnern, umfassend:
Erhalten (101) erster Bilddaten, die zu erkennende Körner enthalten;
Eingeben (102) der ersten Bilddaten in ein erstes Erkennungsmodell, um ein erstes Erkennungsergebnis zu erhalten, wobei das erste Erkennungsergebnis einen Typ der zu erkennenden Körner identifiziert; und
Erhalten eines Konfidenzniveaus, dass die zu erkennenden Körner zu dem Typ von Körnern im ersten Erkennungsergebnis gehört,
**gekennzeichnet durch**:
in Antwort auf das Bestimmen, dass das Konfidenzniveau dafür, dass die zu erkennenden Körner zu dem Typ von Körnern gehören, eine erste vorgegebene Bedingung erfüllt, Eingeben der ersten Bilddaten in ein zweites Erkennungsmodell, das mit dem identifizierten Typ von Körnern assoziiert ist, um ein zweites Erkennungsergebnis zu erhalten, wobei das zweite Erkennungsergebnis eine Sorte der zu erkennenden Körner identifiziert;
Erhalten eines Konfidenzniveaus, dass die zu erkennenden Körner zu einer Sorte des Typs von Körnern im zweiten Erkennungsergebnis gehören;
in Antwort auf das Bestimmen, dass das Konfidenzniveau eine zweite vorgegebene Bedingung erfüllt, Ausgeben der Sorte der zu erkennenden Körner als ein Erkennungsergebnis; und
in Antwort auf das Bestimmen, dass das Konfidenzniveau die zweite vorgegebene Bedingung nicht erfüllt, Ausgeben des Typs der zu erkennenden Körner als das Erkennungsergebnis.

2. Verfahren nach Anspruch 1, ferner umfassend:
Erhalten (201) einer Mehrzahl von Stücken von Information zum zweiten Bild, wobei die Information zum zweiten Bild zweite Bilddaten und entsprechende Kennzeichnungsdaten umfasst;
Durchführen (202) von Verarbeitung zum Verbessern von Eigenschaften auf den zweiten Bilddaten, um Bilddaten mit verbesserten Eigenschaften zu erhalten;
Durchführen (203) von Verarbeitung zum Verbessern von Daten auf den Bilddaten mit verbesserten Eigenschaften, um Bilddaten mit verbesserten Daten zu erhalten; und
Trainieren (204) des ersten Erkennungsmodells und des zweiten Erkennungsmodells unter Verwendung der Bilddaten mit verbesserten Daten und der entsprechenden Kennzeichnungsdaten.

3. Verfahren nach Anspruch 2, wobei in Antwort darauf, dass die Kennzeichnungsdaten einen Typ von Körnern kennzeichnen, der Schritt (204) des Trainierens Folgendes umfasst:
Trainieren des ersten Erkennungsmodells unter Verwendung von Korntypinformation **gekennzeichnet durch** die Kennzeichnungsdaten; und
in Antwort darauf, dass die Kennzeichnungsdaten eine Sorte von Körnern kennzeichnen, der Schritt (204) des Trainierens Folgendes umfasst: Trainieren des zweiten Erkennungsmodells unter Verwendung von Kornsorteninformation **gekennzeichnet durch** die Kennzeichnungsdaten.

4. Verfahren nach Anspruch 2, wobei vor dem Schritt (202) des Durchführens von Verarbeitung zum Verbessern von Eigenschaften auf den zweiten Bilddaten das Verfahren ferner Folgendes umfasst:
Erkennen (202a) der Helligkeit der zweiten Bilddaten und Zurückschneiden der zweiten Bilddaten, um Bilddaten mit einer Helligkeitsdifferenz größer als eine vorgegebene Bedingung zu entfernen, um zweite Bildteildaten zu erhalten, wobei eine Helligkeitsdifferenz der zweiten Bildteildaten einer vorgegebenen Bedingung genügt; und
entsprechend der Schritt (202) des Durchführens von Verarbeitung zur Verbesserung von Eigenschaften auf den zweiten Bilddaten Folgendes umfasst: Durchführen (202b) von Verarbeitung zur Verbesserung von Eigenschaften auf den zweiten Bildteildaten.

5. Verfahren nach einem der Ansprüche 2 bis 4, wobei der Schritt (202) des Durchführens von Verarbeitung zum Verbessern von Eigenschaften auf den zweiten Bilddaten zum Erhalten der Bilddaten mit verbesserten Eigenschaften Folgendes umfasst:
Konvertieren der zweiten Bilddaten in ein Grautonbild und Durchführen von Verarbeitung zur Kontrastverbesserung auf dem Grautonbild, um Bilddaten mit verbessertem Kontrast zu erhalten; und Bestimmen der Bilddaten mit verbessertem Kontrast als die Bilddaten mit verbesserten Eigenschaften.

6. Verfahren nach einem der Ansprüche 2 bis 4, wobei der Schritt (203) des Durchführens von Verarbeitung zum Verbessern von Daten auf den Bilddaten mit verbesserten Eigenschaften zum Erhalten der Bilddaten mit verbesserten Daten Folgendes umfasst:
Durchführen von Umklappen und/oder Rotieren auf den Bilddaten mit verbesserten Eigenschaften, um umgeklappte Bilddaten und/oder rotierte Bilddaten entsprechend zu den Bilddaten mit verbesserten Eigenschaften zu erhalten, und Bestimmen der umgeklappten Bilddaten und/oder der rotierten Bilddaten als die Bilddaten mit verbesserten Daten.

7. Vorrichtung zum Erkennen von Körnern, umfassend:
mindestens einen Prozessor; und
mindestens einen Arbeitsspeicher gekoppelt mit dem mindestens einen Prozessor, wobei der mindestens eine Arbeitsspeicher computerlesbare Instruktionen speichert, die bei Ausführung durch den mindestens einen Prozessor den mindestens einen Prozessor veranlassen, das Verfahren nach einem der Ansprüche 1 bis 6 durchzuführen.

8. Computerprogrammprodukt umfassend Instruktionen zum Veranlassen der Vorrichtung nach Anspruch 7, die Schritte des Verfahrens nach einem der Ansprüche 1 bis 6 auszuführen.

9. Computerspeichermedium, auf dem das Computerprogrammprodukt nach Anspruch 8 gespeichert ist.

## Revendications

1. Procédé de reconnaissance de grains, comprenant les étapes consistant à :
obtenir (101) des premières données d'image comportant des grains à reconnaître ;
entrer (102) les premières données d'image dans un premier modèle de reconnaissance afin d'obtenir un premier résultat de reconnaissance, le premier résultat de reconnaissance identifiant un type de grain à reconnaître ; et
obtenir un niveau de confiance selon lequel le grain à reconnaître appartient au type de grain dans le premier résultat de reconnaissance,
le procédé étant **caractérisé par** les étapes consistant à :
en réponse à la détermination du fait que le niveau de confiance selon lequel le grain à reconnaître appartient au type de grain satisfait à une première condition prédéfinie, entrer les premières données d'image dans un second modèle de reconnaissance associé au type de grain identifié afin d'obtenir un second résultat de reconnaissance, le second résultat de reconnaissance identifiant une variété du grain à reconnaître ;
obtenir un niveau de confiance selon lequel le grain à reconnaître appartient à une variété du type de grain dans le second résultat de reconnaissance ;
en réponse à la détermination du fait que le niveau de confiance satisfait à une seconde condition prédéfinie, délivrer en sortie la variété du grain à reconnaître en tant que résultat de reconnaissance ; et
en réponse à la détermination du fait que le niveau de confiance ne satisfait pas à la seconde condition prédéfinie, délivrer en sortie le type du grain à reconnaître en tant que résultat de reconnaissance.

2. Procédé selon la revendication 1, comprenant en outre les étapes consistant à :
obtenir (201) une pluralité d'éléments de secondes informations d'image, les secondes informations d'image comprenant des secondes données d'image et des données d'étiquette correspondantes ;
exécuter (202) un traitement d'amélioration de caractéristiques sur les secondes données d'image afin d'obtenir des données d'image à caractéristique améliorées ;
exécuter (203) un traitement d'amélioration de données sur les données d'image à caractéristiques améliorées afin d'obtenir des données d'image à données améliorées ; et
former (204) le premier modèle de reconnaissance et le second modèle de reconnaissance au moyen des données d'image à données améliorées et des données d'étiquette correspondantes.

3. Procédé selon la revendication 2, dans lequel, en réponse au fait que les données d'étiquette caractérisent un type de grain, l'étape (204) de formation comprend l'étape consistant à : former le premier modèle de reconnaissance au moyen d'informations de type de grain **caractérisées par** les données d'étiquette ; et
en réponse au fait que les données d'étiquette caractérisent une variété du grain, l'étape (204) de formation comprend l'étape consistant à : former le second modèle de reconnaissance au moyen d'informations de variété de grain **caractérisées par** les données d'étiquette.

4. Procédé selon la revendication 2, le procédé comprenant en outre, avant l'étape (202) d'exécution d'un traitement d'amélioration de caractéristiques sur les secondes données d'image, les étapes consistant à :
reconnaître (202a) une luminosité des secondes données d'image et écrêter les secondes données d'image pour supprimer les données d'image ayant une différence de luminosité supérieure à une condition prédéfinie de manière à obtenir des secondes sous-données d'image, une différence de luminosité des secondes sous-données d'image satisfaisant à une condition prédéfinie ; et
en conséquence, l'étape (202) d'exécution d'un traitement d'amélioration de caractéristiques sur les secondes données d'image comprenant l'étape consistant à : exécuter (202b) un traitement d'amélioration de caractéristiques sur les secondes sous-données d'image.

5. Procédé selon l'une quelconque des revendications 2 à 4, dans lequel l'étape (202) d'exécution d'un traitement d'amélioration de caractéristiques sur les secondes données d'image afin d'obtenir les données d'image à caractéristiques améliorées comprend les étapes consistant à :
convertir les secondes données d'image en une image en échelle de gris et exécuter un traitement d'amélioration de contraste sur l'image en échelle de gris afin d'obtenir des données d'image à contraste amélioré ; et
déterminer les données d'image à contraste amélioré en tant que données d'image à caractéristiques améliorées.

6. Procédé selon l'une quelconque des revendications 2 à 4, dans lequel l'étape (203) d'exécution d'un traitement d'amélioration de données sur les données d'image à caractéristiques améliorées afin d'obtenir les données d'image à données améliorées comprend les étapes consistant à :
exécuter un retournement et/ou une rotation sur les données d'image à caractéristiques améliorées afin d'obtenir des données d'image retournées et/ou des données d'image pivotées correspondant aux données d'image à caractéristiques améliorées, et déterminer les données d'image retournées et/ou les données d'image pivotées en tant que données d'image à données améliorées.

7. Dispositif de reconnaissance de grains, comprenant :
au moins un processeur ; et
au moins une mémoire couplée à l'au moins un processeur, l'au moins une mémoire stockant des instructions lisibles par ordinateur qui, lorsqu'elles sont exécutées par l'au moins un processeur, amènent l'au moins un processeur à exécuter le procédé selon l'une quelconque des revendications 1 à 6.

8. Produit-programme informatique, comprenant des instructions permettant d'amener le dispositif selon la revendication 7 à réaliser les étapes du procédé selon l'une quelconque des revendications 1 à 6.

9. Support de stockage informatique sur lequel est stocké le produit-programme informatique selon la revendication 8.
